# FASCICULE DE BREVET EUROPEEN

(11) **EP 2 200 839 B1**
(45) Date de publication et mention de la délivrance du brevet: **26.08.2015**
(21) Numéro de dépôt: 08840489.2
(22) Date de dépôt: 13.10.2008
(51) Int. Cl.: B42D 15/00, G06K 19/08, G06K 19/10

(54) **Document sécurisé, dispositifs d'édition et d'authentification et procédés correspondants**
Wertdokument, Vorrichtung zur Herstellung und Identifizierung hiervon, und entsprechende Verfahren
Security document, manufacturing and authenticating devices, and corresponding methods

(30) Priorité: 15.10.2007 FR 0758310
(43) Date de publication de la demande: 30.06.2010
(73) Titulaire: RFIT Technologies, 26000 Valence (FR)
(72) Inventeur: VINAY, Julien, 26320 Saint Marcel Les Valence (FR)
(74) Mandataire: Ilgart, Jean-Christophe
(86) Numéro de dépôt international: PCT/EP2008/063700
(87) Numéro de publication internationale: WO 2009/050137

(56) Documents cités:
- EP-A- 1 393 927
- US-A1- 2003 183 695
- US-A1- 2004 100 363
- US-A1- 2004 134 994

## Description

L'invention concerne le domaine de la sécurisation de documents sur support matériel, de type papier ou plastique ou équivalent. De tels documents seront désignés par la suite par l'expression « documents imprimés ».

À l'heure actuelle, il existe de nombreux développements dans le domaine de l'archivage, du tri et de l'organisation de documents électroniques.

Or, il s'avère que de nombreux documents doivent toujours être consultés sous forme imprimée. En particulier, il est toujours impossible de se passer, ne serait-ce que pour des raisons légales, de dossiers physiques, contenant chacun un ensemble de documents sous forme imprimée, ou même une partie seulement de ces documents.

Il peut s'agir de documents authentiques, par exemple des extraits de casier judiciaire ou de rapports d'investigations policières, ou plus généralement, de toute pièce officielle ou de tout document officiel.

Il se pose le problème, d'une manière générale, de pouvoir techniquement réaliser un inventaire automatique et fréquent, voire permanent, d'un ensemble de documents imprimés contenus dans un dossier.

Il se pose en outre le problème de pouvoir contrôler l'intégrité et/ou l'authenticité, de tout ou partie de ces documents, notamment si il s'agit de documents authentiques, et donc du dossier correspondant.

Un autre problème pratique qui se pose, est celui de la présence d'un ou plusieurs de ces documents, lorsque certains d'entre eux doivent être extraits du dossier auquel ils appartiennent.

On souhaite également pouvoir disposer de moyens techniques permettant de réaliser un suivi historique de l'ensemble d'un dossier et/ou d'un ou de plusieurs documents, sans avoir à l'ouvrir au point de courir le risque d'en perdre certains éléments ou certaines pièces. Dans de nombreux cas, on utilise dés dossiers physiques dans lesquels les différentes pièces ou les différents documents sont reliés par des attaches à ce qui constitue l'enveloppe physique du dossier ou sont contenus dans des chemises elles-mêmes reliées par de telles attaches à cette enveloppe. Mais cette solution ne résout pas les problèmes d'intégrité et/ou d'authentification, évoqués ci-dessus. Cela ne résout pas non plus le problème d'un inventaire qui, dans un tel cas, doit toujours être réalisé de manière manuelle.

Enfin, même dans le cas où un dossier physique comporte également une version numérique, il se pose le problème de pouvoir trouver un lien entre les deux versions, physique et numérique.

La demande de brevet US 2004/100363 décrit un procédé d' identification et d' authentification d'un document à partir d'un tag RFID.

La demande de brevet US 2004/134994 décrit un procédé de sécurisation et d'authentification d'un document en liaison avec un utilisateur.

La demande de brevet EP 1393927 décrit un procédé d'authentification d'un document à partir de la copie du contenu de ce document dans une puce RFID. Lors d'un contrôle, le contenu de la puce est édité et comparé à ce qui est imprimé sur le document.

### EXPOSÉ DE L'INVENTION

L'invention concerne tout d'abord un document sécurisé comportant un support physique muni de premiers moyens de marquage réalisant une identification du document, et des deuxièmes moyens de marquage réalisant une authentification du document.

Les deuxièmes moyens de marquage mettent par exemple en oeuvre au moins un paramètre physique du document et/ou d'un dispositif l'ayant imprimé.

La prise en compte, dans les deuxièmes moyens de marquage, d'un paramètre physique du document lui-même et/ou du dispositif l'ayant imprimé, donne une garantie de pouvoir vérifier l'authenticité du document. Les deuxièmes moyens de marquage stockent ou mémorisent ces informations sous forme codée.

Les premiers et les deuxièmes moyens de marquage peuvent être corrélés.

Le support physique est par exemple en papier ou en matière plastique.

Selon un exemple de réalisation, les premiers moyens de marquage sont de type RFID, ou encore de type code à barres, ou encore de type code matriciel.

Les deuxièmes moyens de marquage peuvent, quant à eux, être obtenus à partir de moyens de type signature hybride (prise en compte d'un paramètre physique du support papier) ou signature numérique (prise en compte d'un paramètre physique du dispositif d'impression).

De préférence les premiers moyens de marquage peuvent être lus lorsqu'une pluralité de documents tels que décrits ci-dessus sont superposés.

L'invention concerne en outre un dispositif d'édition de documents sécurisés, du type selon l'invention, comportant :
- des moyens de lecture unitaire des premiers moyens de marquage du support physique d'un document,
- des moyens pour calculer des deuxièmes moyens de marquage, et pour appliquer ces deuxièmes moyens de marquage audit document.

Les deuxièmes moyens de marquage sont calculés à l'aide d'au moins un paramètre physique du document et/ou d'un dispositif l'ayant imprimé. Ce calcul peut comporter un codage d'au moins un paramètre physique du document et/ou d'un dispositif l'ayant imprimé.

Les deuxièmes moyens de marquage peuvent être corrélés aux premiers moyens de marquage.

Un dispositif selon l'invention peut en outre comporter des moyens pour la lecture des deuxièmes moyens de marquage.

Un tel dispositif peut en outre comporter des moyens pour la lecture et/ou l'écriture de données dans les premiers moyens de marquage.

Des moyens pour mesurer une caractéristique physique de chaque document peuvent également être prévus.

L'invention concerne également un dispositif de vérification de l'authenticité de documents sécurisés, du type selon l'invention, comportant :
- des moyens de lecture unitaire des premiers moyens de marquage du support physique d'un document,
- des moyens pour la lecture unitaire des deuxièmes moyens de marquage.

L'invention concerne enfin un procédé d'édition de documents sécurisés, comportant des premiers moyens de marquage réalisant une identification du document. Selon ce procédé, on calcule des deuxièmes moyens de marquage, à l'aide d'au moins un paramètre physique du document et/ou de moyens d'impression de ce document, et on applique ces deuxièmes moyens de marquage audit document. Le calcul comporte un codage d'au moins un paramètre physique du document et/ou de moyens d'impression de ce document.

### BRÈVE DESCRIPTION DES DESSINS

- La figure 1 représente un document physique, muni de deux moyens marqueurs selon l'invention,
- La figure 2 représente une superposition de documents physiques, chacun étant muni de deux moyens marqueurs selon l'invention,
- La figure 3 est un exemple d'architecture globale d'un système selon l'invention,
- La figure 4 est un exemple de réalisation d'un périphérique d'émission et de contrôle de documents selon l'invention,
- La figure 5 est une version simplifiée d'un dispositif de vérification de documents,
- La figure 6 représente un réceptacle RFID et un dossier à poser dans ce réceptacle pour contrôle,
- les figures 7A-7C sont des exemples d'étapes de contrôle d'un dossier physique selon l'invention.

### EXPOSÉ DÉTAILLÉ DE MODES DE RÉALISATION PARTICULIERS

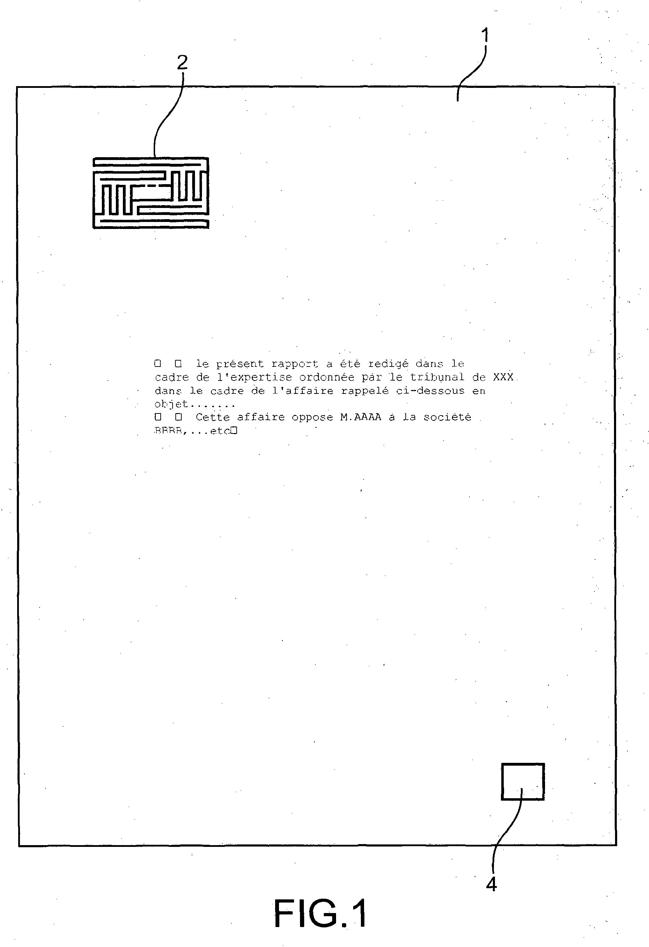

La figure 1 représente un exemple de document physique 1, par exemple un support papier, imprimé ou pas, muni de deux moyens marqueurs 2, 4. Un support papier peut être un format standard, couramment utilisé dans le domaine des affaires ou dans le domaine administratif, tel que le format « A4 ».

Des deux marqueurs, l'un (2) est un identifiant, l'autre (4) est un authentifiant. Ils sont tous deux apposés sur le document physique.

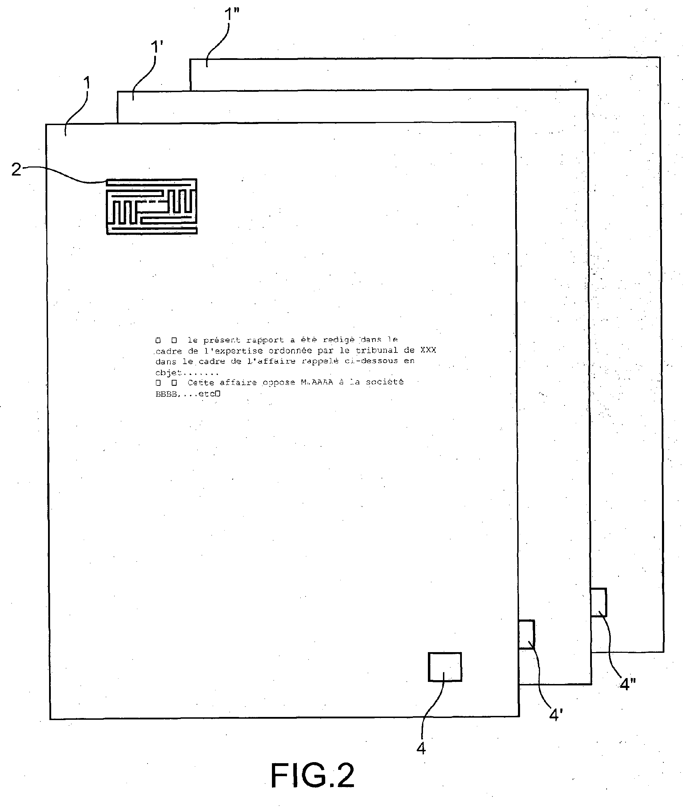

Le marqueur 2 retenu pour la fonction d'identification est par exemple un tag RFID. Ce marqueur est doté d'une mémoire permettant l'enregistrement de données de manière dynamique (modifiable dans le temps). Ce marqueur est d'un type permettant également la lecture de tags individuels, y compris lorsque plusieurs documents 1, 1', 1'', comportant chacun, comme dans la présente invention, des premiers et des deuxièmes moyens de marquage, sont superposés, comme représenté de manière schématique en figure 2. On peut par exemple utiliser, pour les tags RFID, la technologie RFID à une fréquence de 13,56 MHz, dans le cadre de la norme ISO 18000-3 Mode 2.

Le tag peut être apposé sur l'une ou l'autre des faces du document 1. Il peut être collé sur le recto du document (cas de la figure 1), il peut aussi être collé au dos du support considéré. Selon une variante, on réalise une encapsulation du tag RFID dans le document lui-même, par exemple dans le support papier.

Il existe d'autres exemples d'un tel marqueur 2 que l'on peut mettre en oeuvre dans le cadre de la présente invention :
- un code à barres, technologie éprouvée et d'un faible coût, qui ne permet cependant de réaliser qu'un inventaire manuel unitaire,
- ou encore un code matriciel : cette solution permet de rassembler, sur une surface minimale, un grand nombre d'informations numériques cryptées ou non, de réaliser un stockage statique d'informations,
- ou encore une encre conductrice, du type encre résonnante, qui réagit à une onde et envoie, en retour d'une telle onde, une information, par exemple un numéro de série,
- ou encore un Tag RFID de type SAW («surface acoustic wave»). Cette technologie, comme la précédente, n'a pas de mémoire associée. Ce sont deux technologies «de type «chipless» (sans puce).

Dans tous les cas, le moyen 2 de marquage de type « identification » permet de mémoriser, sous une forme ou une autre, une ou des informations ou données, par exemple un numéro de série, et/ou un numéro ou une référence d'un dossier auquel appartient le document et/ou un historique du dossier (date d'introduction de chaque pièce ou document dans le dossier ou date d'édition de chaque pièce ou document...) et/ou un ou des mots clés et/ou un ou des liens internet ... etc.

Un exemple de marqueur 4, ne pouvant pas être copié et pouvant être utilisé pour la partie « authentification » est une signature numérique ou une signature hybride pouvant être lue par un moyen optique tel qu'un scanner ou un moyen électronique, ces deux solutions permettant la détection de copies. Dans les deux cas, il y a cryptage et codage d'une valeur de caractéristique obtenue dans un marqueur imprimé sur le document.

Ce deuxième moyen de marquage permet de coder et de stocker, sous la forme ainsi codée, ou stocke ou mémorise, sous forme coudée :
- soit une caractéristique unique, physique, du document sur lequel elle est apposée (cas de la signature hybride); cette caractéristique est, par exemple, un paramètre physique de l'état de surface d'une partie ou d'une zone de la feuille de papier, ou du matériau constitutif du document; notamment il peut s'agir de la réponse de l'état de surface à un bombardement optique ou électromagnétique: cette réponse peut être numérisée,
- soit une caractéristique unique d'un appareil qui a permis l'impression ou l'édition du document (cas de la signature numérique); ce peut être notamment une caractéristique qui identifie la tête d'impression de l'imprimante qui a permis de l'imprimer ou encore une caractérisation des déformations engendrées sur une image, lors d'une impression, par un dispositif d'impression. Dans ce cas, on authentifie l'origine du document: on sait alors avec certitude que, par exemple, le document a été imprimé par une imprimante d'un organisme officiel, par exemple encore l'imprimante n° XXX du bureau de police judiciaire, ou l'imprimante n°YYY de tel bureau de la préfecture ou de la mairie.

Dans le cas d'un document papier on peut citer, à titre d'exemple de paramètres de surface, la réponse, par exemple encore les caractéristiques réfléchissantes, dans un domaine spectral donné, d'une zone du papier après que celle-ci ait été soumise à un bombardement par un rayonnement optique ou électromagnétique : chaque feuille va avoir des propriétés de réflexion différentes, par exemple dans le domaine infrarouge, de celles des autres feuilles.

Dans l'authentifiant peuvent également être éventuellement incorporées des données d'horodatage.

Le marqueur authentifiant apporte une garantie quant à l'authenticité du document sur lequel il est apposé. Toute copie du document, et donc son marqueur authentifiant, sera détecté.

La lecture du marqueur authentifiant est réalisée unitairement. Lors de cette lecture, on lit le paramètre physique qui a fait l'objet du codage, on décode et on décrypte le marqueur authentifiant pour obtenir le paramètre physique mesuré lors de l'émission du document, et on compare les valeurs obtenues. Dans le cas du paramètre physique du dispositif d'impression, il n'y a pas de réacquisition du paramètre physique, les paramètres physiques du dispositif d'impression original pouvant être stockés directement dans l'électronique du dispositif ou sur un serveur, local ou distant, sécurisé.

Ayant identifié, de manière unique, le document ou les moyens qui ont permis de l'imprimer ou de l'éditer, il est possible de générer un code unique qui va pouvoir être appliqué au document. Ce code est associé à une clé, ladite clé faisant intervenir la caractéristique unique du document qui a été sélectionnée pour l'authentifier, par exemple le paramètre physique de l'état de surface, ou la caractéristique unique des moyens d'impression ou d'édition.

Les deux marqueurs peuvent être corrélés: par exemple, la clé permet également de coder un code contenu dans les premiers moyens marqueurs, par exemple un numéro de série issu d'un tag RFID. Il est également possible de réaliser une corrélation dans l'autre sens, en écrivant, dans les premiers moyens marqueurs, une partie seulement des éléments de la signature. Cette corrélation augmente dans tous les cas la sécurité du document.

Il devient alors possible d'effectuer les opérations suivantes pour tous les supports papier (dossiers, documents, pochettes, chemises, etc.) ainsi équipés :
a) identifier chaque document dans un dossier, puis dans une pluralité de dossiers,
b) et/ou compter les documents dans un dossier déterminé,
c) et/ou réaliser l'inventaire de documents dans un dossier, puis dans une pluralité de dossiers,
d) et/ou authentifier un document dans un dossier,
e) et/ou émettre des documents et/ou des dossiers sécurisés,
f) et/ou vérifier la cohérence d'un dossier,
g) et/ou vérifier la présence de documents dans un dossier.

Les opérations a) - c), f), g) ne requièrent pas l'usage des deuxièmes moyens de marquage.

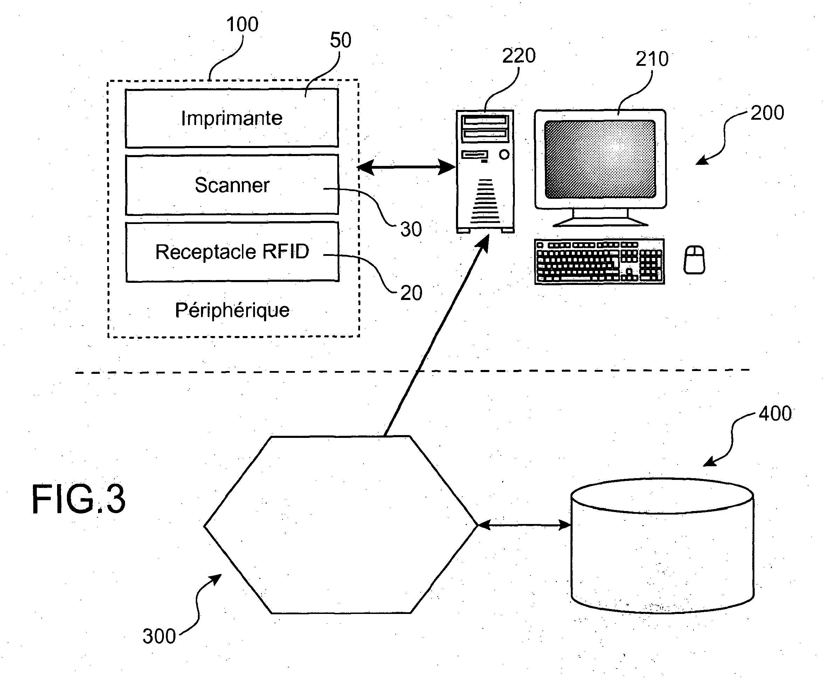

Comme on le voit sur la figure 3, un dispositif 100 selon l'invention peut comporter des moyens 50, permettant de réaliser l'impression d'un marqueur 4 dédié à l'authentification d'un document (par exemple un support papier), éventuellement en corrélation avec le marqueur identifiant. Des moyens 30, optiques ou électroniques, peuvent permettre la relecture de la signature authentifiante, en vue d'un décodage distant ou local. Cette étape de relecture a été décrite ci-dessus.

Un tel dispositif peut en outre être muni d'un réceptacle RFID 20 permettant la lecture en masse des marqueurs identifiants, et des mémoires associées, présents sur le dossier et sur chacun de ses documents.

Un tel dispositif 100 (ou «périphérique d'émission et de contrôle de documents (supports papier dans l'exemple choisi)») peut être utilisé en tant que périphérique d'un ordinateur ou microordinateur 200, auquel il est connecté et auquel il peut transférer ses données.

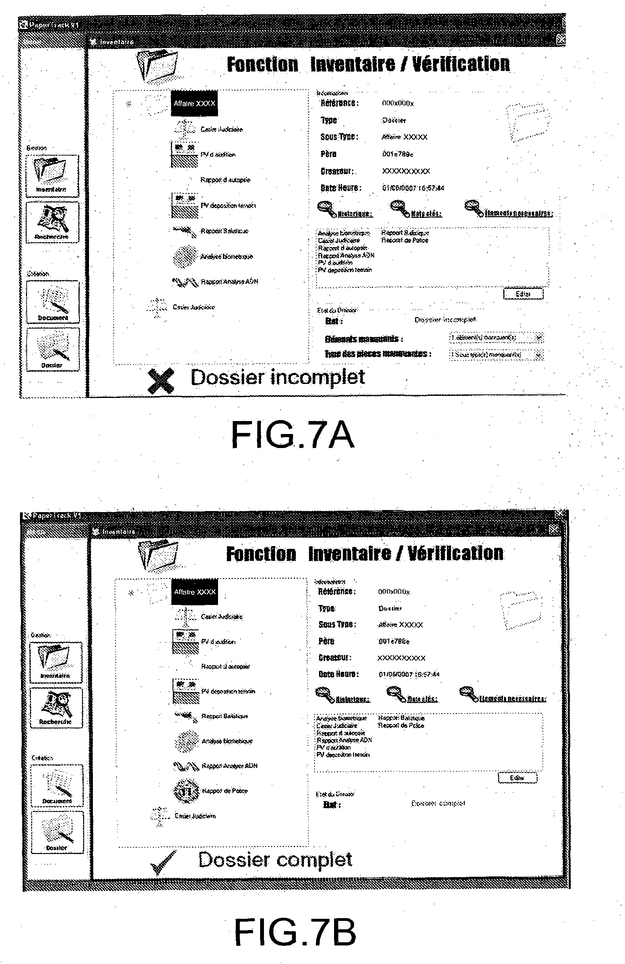

Des moyens de visualisation 210 permettent de visualiser des informations relatives à des opérations de préparation de données de marquage. En lecture de l'identifiant d'un dossier comportant plusieurs documents, et de l'identifiant de chacun des documents contenus dans le dossier, de tels moyens permettent de faire apparaître des informations relatives à la constitution de ce dossier, comme illustré en figures 7A-7C.

Dans une zone mémoire de l'ordinateur 200 sont mémorisées des données ou instructions de programme 300 pour mettre en oeuvre un procédé selon l'invention, et notamment pour, commander au dispositif 100 la génération et le marquage du marqueur authentifiant (en donnant éventuellement quelques paramètres optionnels: date, et éventuellement heure, et/ou numéro de série RFID, etc....), éventuellement recevoir du dispositif 100 une version simplifiée du marqueur authentifiant venant d'être déposé sur le support (corrélation), éventuellement stocker en mémoire des informations relatives à l'identifiant, éventuellement ordonner la lecture ou l'écriture de données présentes dans le marqueur identifiant (stockage d'informations dans la puce RFID et/ou corrélation avec le marqueur authentifiant).

D'autres informations complémentaires peuvent être mémorisées. L'ensemble de ces informations peut être également stocké sous forme de base de données 400.

Les données ou instructions de programme 300 pour mettre en oeuvre un procédé selon l'invention peuvent être transférées dans une zone mémoire du serveur à partir d'une disquette ou de tout autre support pouvant être lu par un micro-ordinateur ou un ordinateur (par exemple : disque dur, mémoire morte ROM, mémoire vive dynamique DRAM ou tout autre type de mémoire RAM, disque optique compact, élément de stockage magnétique ou optique).

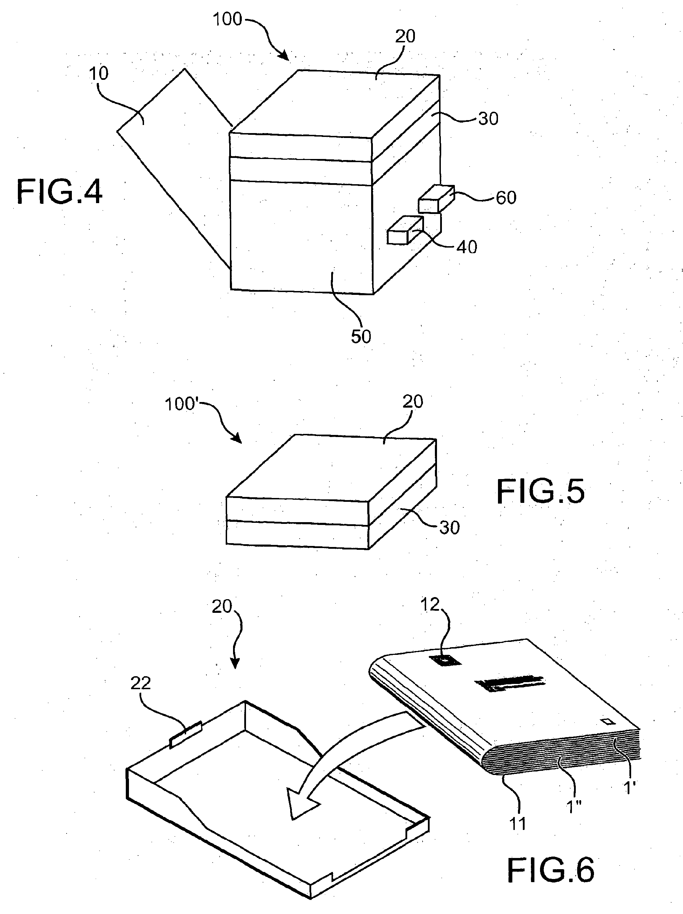

Un exemple de réalisation d'un dispositif 100 (périphérique d'émission et de contrôle de documents) est illustré sur la figure 4. Schématiquement, ce dispositif comporte un bac à feuilles, désigné sur la figure 4 par la référence 10. Les feuilles posées dans ce bac sont équipées de moyens d'identification, par exemple d'une étiquette RFID.

La référence 20 désigne le réceptacle (ici, de type « RFID ») permettant la lecture et l'écriture, en masse, des identifiants présents sur les différents supports papier ainsi que des mémoires associées. Des moyens 30 optiques ou électroniques permettent la relecture des signatures authentifiantes.

Une antenne RFID 40 permet la lecture et l'écriture unitaire de données dans le tag RFID présent sur le support papier lors de la phase d'émission.

Des moyens 60 permettent de mesurer une caractéristique physique de chaque support. Cette caractéristique est ensuite transmise à des moyens de calcul localisés sur ou dans le dispositif d'émission et de contrôle permettant de calculer le codage, et donc les moyens 4 de marquage pour l'authentification.

Enfin, la référence 50 désigne un système ou des moyens d'impression et/ou de marquage. Ces moyens permettent d'apposer l'authentifiant sur le document sélectionné.

Un tel dispositif peut être réalisé sous la forme d'une station « tout en un ». Ce dispositif permet l'émission de copies certifiées de documents authentiques, le contrôle de dossiers et le contrôle d'authenticité de documents. Il combine donc une fonction d'impression et/ou de marquage, une fonction de lecture de premiers moyens de marquage, tels que des moyens de type RFID, et une fonction de lecture de deuxièmes moyens de marquage, par exemple des marqueurs authentifiant.

La figure 5 représente un exemple de réalisation d'un dispositif 100', qui permet d'effectuer la vérification de l'authenticité de documents (par exemple : supports papier) ainsi que les étapes de vérification de cohérence et/ou de localisation et/ou de recherche et comptage des documents. Il n'y a pas d'émission de documents sécurisés avec ce dispositif, qui comporte un réceptacle RFID 20 permettant la lecture et l'écriture en masse des identifiants présents sur les différents documents, ainsi que des mémoires associées. Des moyens 30 optiques permettent la relecture des signatures authentifiantes.

Un exemple de réceptacle 20, (réceptacle « RFID » dans l'exemple donné), permettant la lecture et l'écriture, en masse, des identifiants présents sur les différents documents ainsi que des mémoires associées, et pouvant être utilisé dans l'un ou l'autre des dispositifs des figures 4 ou 5, est illustré sur la figure 6. Ce réceptacle se présente sous la forme d'une « bannette » telle que celles utilisées pour le stockage de documents sur des bureaux d'entreprises. Des moyens 22 de lecture permettent la lecture des identifiants RFID du dossier et de chacun des documents qu'il contient.

Chacun de ces dispositifs des figures 5 et 6 peut être relié à des moyens de traitement de données tel que les moyens informatiques 200 de la figure 3. Lors d'opérations de lecture, par exemple d'un dossier 11 (figure 6) muni d'un tag RFID 12 et contenant une pluralité de documents 1, 1', 1'',... les informations relatives à la constitution du dossier 11 apparaissent à l'écran 210. Un utilisateur peut alors immédiatement voir quels documents sont contenus dans le dossier, et quels documents sont manquants, et ce sans avoir à ouvrir le dossier.

Le contrôle de l'authenticité d'un document est réalisé à l'aide des moyens 30 des figures 4 ou 5. Le périphérique 100 ou 100' fait alors l'acquisition du marqueur authentifiant présent sur le document, puis décode la signature et détermine l'authenticité du document présenté. Ce résultat peut être affiché sur les moyens de visualisation 210.

L'émission, à l'aide du dispositif 100, d'un document sécurisé, est réalisée de la manière suivante.

Un support papier, venant du bac 10 est entraîné dans le système d'impression 50.

Les moyens 40 procèdent à la lecture unitaire du numéro de série unique RFID.

Une signature unique authentifiante est calculée, par exemple en corrélant les paramètres suivants:
- date,
- paramètre physique du système d'impression et/ou paramètre physique du supports papier,
- numéro de série unique du tag RFID,
- informations concernant le document émis (dossier parent, documents associés, etc....) .

Une partie de cette signature peut être ensuite encodée dans le tag RFID par l'intermédiaire des moyens 40 (en vue de la corrélation des deux types de marquage).

Des informations concernant le document peuvent ensuite être encodées dans le tag RFID par l'intermédiaire de ces moyens 40.

Le marqueur authentifiant issu de la signature authentifiante est imprimé ou déposé sur le document. D'autres motifs ou textes peuvent également être imprimés sur le support papier.

Les différentes informations peuvent également être stockées dans la base de données 400 (figure 3).

Lors d'un contrôle de cohérence d'un dossier et/ou d'opérations de comptage de documents et/ou de localisation et recherche de documents, on procède de la manière suivante.

Plusieurs documents sont placés dans le réceptacle RFID 20. Ils sont par exemple constitutifs d'un dossier 11 (figure 6).

Le périphérique procède à la lecture des informations contenue dans les marqueurs identifiants et envoie les informations aux moyens 200 de traitement des données (figures 3) qui effectuent les vérifications de cohérence.

L'invention permet de vérifier la présence de toutes les pièces ou de tous les documents d'un dossier dans ce dossier, et ce sans autres opérations manuelles que la prise en main du dossier et son positionnement dans un dispositif de lecture selon l'invention.

La « cohérence » d'un dossier peut ensuite être vérifiée, il s'agit alors de savoir si les « bons » documents sont dans ce dossier.

Un exemple de procédures d'authentification, ou d'inventaire, va être décrit pour un dossier de type judiciaire en liaison avec les figures 7A-7C.

Selon un exemple, ce dossier, identifié par le nom de l'affaire correspondante (XXX), par exemple le nom de l'un des protagonistes (XXX) ou des deux protagonistes (XXX c/ YYY ou XXX vs. YYY), contient des éléments tels que :
- un extrait de casier judiciaire,
- un procès-verbal d'audition,
- un rapport d'autopsie,
- un procès-verbal relatif à la déposition d'un témoin,
- un rapport balistique,
- un document d'expertise, tels qu'une analyse biométrique,
- un autre document d'expertise, tel qu'un rapport d'analyse ADN,
- un rapport de police.

Le dossier physique est placé dans des moyens de lecture telle que ceux de la figure 5. Les moyens identifiants, par exemple de type RFID, sont lus et leur lecture fait apparaître la liste des documents ci-dessus, sauf le rapport de police : le dossier est donc incomplet.

Une liste des documents du dossier complet peut avoir été préalablement mémorisée. La comparaison entre le résultat de la lecture des moyens identifiants et le contenu complet du dossier révèle donc l'absence d'une pièce. Cette information, de même que la liste des pièces effectivement disponibles dans le dossier physique à cet instant, peut apparaître sur l'écran 210 sous la forme d'un résultat de recherches tel qu'illustré sur la figure 7A. Le caractère incomplet du dossier est signalé à l'utilisateur.

Lorsque le dossier est complet, et donc lorsque la comparaison indique que toutes les pièces sont dans le dossier, cette information apparaît là encore sur l'écran 210, sous la forme d'un résultat de recherche, tel qu'illustré sur la figure 7B. Le caractère complet du dossier est signalé à l'utilisateur avec la liste de toutes les pièces du dossier complet.

A ce stade, on ne sait pas si chacun des documents contenus dans le dossier est un document authentique, ou pas. Par exemple, l'un de ces documents pourrait être une copie de l'original : ce peut être le cas lorsqu'un tel original doit être remis dans les mains d'un expert et qu'une copie (donc une pièce non authentique) doit être gardée dans le dossier. Pour cette détermination d'authenticité, on met en oeuvre la fonction de lecture des deuxièmes moyens de marquage, à l'aide du dispositif de la figure 4 ou 5, d'un document pour lequel on s'interroge sur son authenticité.

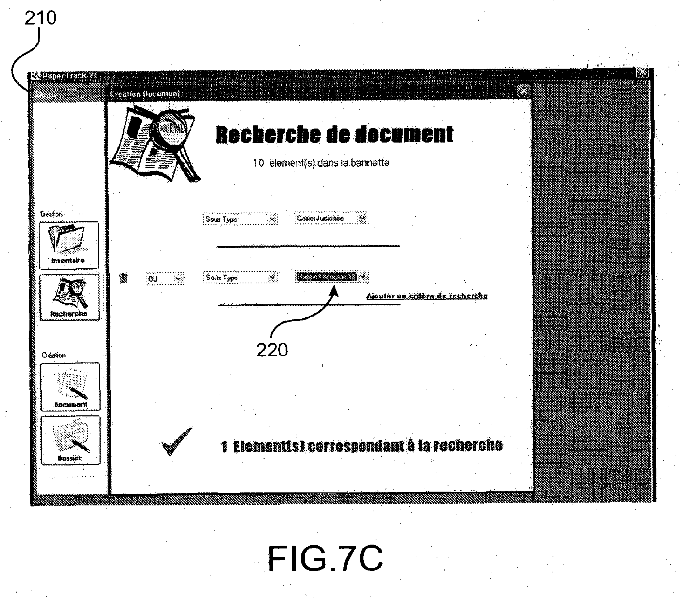

La figure 7C illustre le cas d'une recherche de documents dans un dossier, à l'aide d'un dispositif tel que celui de la figure 6. Un onglet 220 permet de sélectionner un type de document, un rapport d'analyse dans le cas représenté sur la figure. La lecture des tags RFID des différents documents permet de conclure à la présence d'un et un seul document, dont le dossier, correspondant à la recherche. Ce résultatat est présenté à l'utilisateur par l'écran 210.

L'invention permet également, dans le cas où un dossier physique comporte également une version numérique, de pouvoir trouver un lien entre les deux versions, physique et.numérique. La version numérique est associée à un identifiant (numéro de série RFID, ou code barre, ou code matriciel) présent sur le document imprimé : suite à la lecture de l'identifiant présent sur le document physique, l'application logicielle peut retrouver le fichier numérique correspondant au document. Une fois ce fichier localisé, l'application logicielle peut, par exemple, afficher ce document numérique et/ou tous les documents numériques associés à ce document et/ou proposer d'envoyer cette version numérique du document par courrier électronique et/ou proposer le reclassement de cette version numérique du document et/ou la suppression de cette version numérique du document et/ou proposer une association de cette version numérique du document avec d'autres versions numériques de documents.

## Revendications

1. Document sécurisé comportant un support physique (1, 1', 1") muni de premiers moyens (2) de marquage réalisant une identification du document, et des deuxièmes moyens (4) de marquage réalisant une authentification du document codant et stockant au moins un paramètre physique du document et/ou d'un dispositif l'ayant imprimé.

2. Document selon la revendication 1, les premiers (2) et les deuxièmes (4) moyens de marquage étant corrélés.

3. Document sécurisé selon la revendication 1, le support physique (1, 1', 1") étant en papier ou en matière plastique.

4. Document sécurisé selon l'une des revendications 1 à 3, les premiers moyens (2) de marquage étant de type RFID, avec ou sans puce, ou encre résonnante, ou encore de type code à barres, ou encore de type code matriciel.

5. Document sécurisé selon l'une des revendications 1 à 4, les deuxièmes moyens (4) de marquage étant de type signature numérique, ou signature hybride.

6. Document sécurisé selon l'une des revendications 1 à 5, les premiers moyens de marquage (2) pouvant être lus, y compris lorsqu'une pluralité de documents (1, 1', 1'') selon l'une des revendications 1 à 5 sont superposés.

7. Document sécurisé selon l'une des revendications 1 à 6, les deuxièmes moyens de marquage (4) codant et stockant :
- au moins un paramètre physique de l'état de surface du matériau constitutif du document ;
- ou une caractéristique qui identifie une tête d'impression d'une imprimante qui a permis d'imprimer le document ou encore une caractérisation des déformations engendrées sur une image, lors d'une impression, par un dispositif d'impression.

8. Document selon la revendication précédente, les deuxièmes moyens de marquage (4) codant et stockant au moins un paramètre physique de l'état de surface du matériau constitutif du document, ce paramètre physique comportant la réponse de l'état de surface à un bombardement optique ou électromagnétique et/ou, dans le cas d'un document papier, les caractéristiques réfléchissantes, dans un domaine spectral donné, d'une zone du papier après que celle-ci ait été soumise à un bombardement par un rayonnement optique ou électromagnétique.

9. Dispositif (100) d'édition de documents sécurisés, du type de l'une des revendications précédentes, comportant :
- des moyens (20) de lecture unitaire des premiers moyens de marquage du support physique d'un document,
- des moyens (50, 200) pour calculer des deuxièmes moyens de marquage, codant et stockant au moins un paramètre physique du document et/ou d'un dispositif l'ayant imprimé, et pour appliquer ces deuxièmes moyens de marquage audit document.

10. Dispositif selon la revendication 9, les moyens (50, 200) pour calculer des deuxièmes moyens de marquage permettant en outre une corrélation des deuxièmes et des premiers moyens de marquage.

11. Dispositif selon l'une des revendications 9 à 10, comportant en outre :
- des moyens (40) pour la lecture et/ou l'écriture de données dans les premiers moyens de marquage,
- et/ou des moyens (30) pour la lecture des deuxièmes moyens de marquage.

12. Dispositif selon l'une des revendications 9 à 11, comportant en outre des moyens (60) pour mesurer une caractéristique physique de chaque document.

13. Procédé d'édition de documents sécurisés (1, 1', 1"), du type de l'une des revendications 1 à 8, comportant des premiers moyens (2) de marquage réalisant une identification du document, comportant :
- un calcul des deuxièmes moyens (4) de marquage, ce calcul comportant un codage d'au moins un paramètre physique du document et/ou de moyens d'impression de ce document,
- l'application de ces deuxièmes moyens de marquage audit document.

14. Dispositif (100') de vérification de l'authenticité de documents sécurisés, du type de l'une des revendications 1 à 8, comportant :
- des moyens (20) de lecture unitaire des premiers moyens de marquage du support physique d'un document à authentifier,
- des moyens (30) pour la lecture des deuxièmes moyens de marquage, permettant de :
a) lire l'au moins un paramètre physique du document à authentifier,
b) décoder les deuxièmes moyens de marquage pour obtenir l'au moins un paramètre physique du document original, et
c) comparer la valeur de l'au moins un paramètre physique du document à authentifier avec celle du document original ;
ou bien permettant de :
a') décoder les deuxièmes moyens de marquage pour obtenir l'au moins un paramètres physique du dispositif ayant imprimé le document original, et
b') comparer la valeur de l'au moins un paramètre physique du dispositif ayant imprimé le document à authentifier avec celle du dispositif ayant imprimé le document original.

15. Procédé de vérification de l'authenticité de documents sécurisés, du type de l'une des revendications 1 à 8, comportant :
- une lecture unitaire des premiers moyens de marquage du support physique d'un document à authentifier,
- une lecture des deuxièmes moyens de marquage.

## Patentansprüche

1. Gesichertes Dokument, umfassend einen physischen Träger (1, 1', 1 "), der mit ersten Markierungsmitteln (2) ausgestattet ist, welche eine Identifizierung des Dokuments realisieren, und mit zweiten Markierungsmitteln (4), welche eine Authentifizierung des Dokuments realisieren und wenigstens einen physischen Parameter des Dokuments und/oder einer Vorrichtung, die es gedruckt hat, kodieren und speichern.

2. Dokument nach Anspruch 1, wobei die ersten (2) und die zweiten (4) Markierungsmittel korreliert sind.

3. Gesichertes Dokument nach Anspruch 1, wobei der physische Träger (1, 1', 1 ") aus Papier oder aus Kunststoffmaterial ist.

4. Gesichertes Dokument nach einem der Ansprüche 1 bis 3, wobei die ersten Markierungsmittel (2) vom Typ RFID mit oder ohne Chip sind, oder resonante Tinte, oder auch vom Typ Streifencode, oder auch vom Typ Matrixcode.

5. Gesichertes Dokument nach einem der Ansprüche 1 bis 4, wobei die zweiten Markierungsmittel (4) vom Typ digitale Signatur oder hybride Signatur sind.

6. Gesichertes Dokument nach einem der Ansprüche 1 bis 5, wobei die ersten Markierungsmittel (2) ausgelesen werden können, auch dann, wenn eine Mehrzahl von Dokumenten (1, 1', 1 ") nach einem der Ansprüche 1 bis 5 überlagert sind.

7. Gesichertes Dokument nach einem der Ansprüche 1 bis 6 wobei die zweiten Markierungsmittel (4) folgendes kodieren und speichern:
- wenigstens einen physischen Parameter des Oberflächenzustands des Materials, aus dem das Dokument gebildet ist;
- oder eine Eigenschaft, die einen Druckkopf eines Druckers identifiziert, der das Drucken des Dokuments ermöglicht hat, oder auch eine Charakterisierung der Verformungen, die bei einem Bild durch eine Druckvorrichtung während eines Drucks erzeugt wurden.

8. Gesichertes Dokument nach dem vorhergehenden Anspruch, wobei die zweiten Markierungsmittel (4) wenigstens einen physischen Parameter des Oberflächenzustands des Materials kodieren und speichern, aus dem das Dokument gebildet ist, wobei dieser physische Parameter die Antwort des Oberflächenzustands auf eine optische oder elektromagnetische Bombardierung umfasst, und/oder, im Fall eines Papierdokuments, die Reflexionseigenschaften einer Zone des Papiers in einem gegebenen Spektralbereich, nachdem diese einer Bombardierung durch eine optische oder elektromagnetische Strahlung ausgesetzt wurde.

9. Vorrichtung (100) zum Editieren von gesicherten Dokumenten des Typs nach einem der vorhergehenden Ansprüche:
- Mittel (20) zum einheitlichen Auslesen der ersten Markierungsmittel des physischen Trägers eines Dokuments;
- Mittel (50, 200) zum Berechnen der zweiten Markierungsmittel, die wenigstens einen physischen Parameter des Dokuments und/oder einer Vorrichtung kodieren und speichern, die es gedruckt hat, und zum Aufbringen dieser zweiten Markierungsmittel auf das Dokument.

10. Vorrichtung nach Anspruch 9, wobei die Mittel (50, 200) zum Berechnen der zweiten Markierungsmittel ferner eine Korrelation der zweiten und der ersten Markierungsmittel ermöglichen.

11. Vorrichtung nach einem der Ansprüche 9 bis 10, ferner umfassend:
- Mittel (40) zum Auslesen und/oder zum Schreiben von Daten aus den/in die ersten Markierungsmittel,
- und/oder Mittel (30) zum Auslesen der zweiten Markierungsmittel.

12. Vorrichtung nach einem der Ansprüche 9 bis 11, ferner umfassend Mittel (60) zum Messen einer physischen Eigenschaft jedes Dokuments.

13. Verfahren zum Editieren von gesicherten Dokumenten (1, 1', 1 ") vom Typ nach einem der Ansprüche 1 bis 8, umfassend erste Markierungsmittel (2), die eine Identifizierung des Dokuments realisieren, umfassend:
- eine Berechnung der zweiten Markierungsmittel (4), wobei diese Berechnung eine Kodierung wenigstens eines physischen Parameters des Dokuments und/oder von Mitteln zum Drucken dieses Dokuments umfaßt,
- das Aufbringen dieser zweiten Markierungsmittel auf das Dokument.

14. Vorrichtung (100') zur Überprüfung der Authentizität von gesicherten Dokumenten vom Typ nach einem der Ansprüche 1 bis 8, umfassend:
- Mittel (20) zum einheitlichen Auslesen der ersten Markierungsmittel des physischen Trägers eines zu authentifizierenden Dokuments,
- Mittel (30) zum Auslesen der zweiten Markierungsmittel, die es ermöglichen:
a) wenigstens einen physischen Parameter des zu authentifizierenden Dokuments auszulesen,
b) die zweiten Markierungsmittel zu dekodieren, um wenigstens einen physischen Parameter des Originaldokuments zu erhalten, und
c) den Wert des wenigstens einen physischen Parameters des zu authentifizierenden Dokuments mit jenem des Originaldokuments zu vergleichen;
oder aber es ermöglichen:
a') die zweiten Markierungsmittel zu dekodieren, um den wenigstens einen physischen Parameter der Vorrichtung zu erhalten, der das Originaldokument gedruckt hat, und
b') den Wert des wenigstens einen physischen Parameters der Vorrichtung, die das zu authentifzierende Dokument gedruckt hat, mit jenem der Vorrichtung zu vergleichen, die das Originaldokument gedruckt hat.

15. Verfahren zum Überprüfen der Authentizität von gesicherten Dokumenten des Typs nach einem der Ansprüche 1 bis 8, umfassend:
- ein einheitliches Auslesen der ersten Markierungsmittel des physischen Trägers eines zu authentifizierenden Dokuments,
- ein Auslesen der zweiten Markierungsmittel.

## Claims

1. A secured document including a physical medium (1, 1', 1") provided with first marking means (2) achieving identification of the document, and second marking means (4) achieving authentication of the document, encoding and storing at least one physical parameter of the document and/or of a device having printed it.

2. The document according to claim 1, wherein the first (2) and second (4) marking means are correlated.

3. The secured document according to claim 1, wherein the physical medium (1, 1', 1") is in paper or in plastic material.

4. The secured document according to one of claims 1 to 3, wherein the first marking means (2) is of the RFID type, with or without a chip, or resonant ink, or further of the barcode type, or further of the matrix code type.

5. The secured document according to one of claims 1 to 4, wherein the second marking means (4) is of the digital signature or hybrid signature type.

6. The secured document according to one of claims 1 to 5, wherein the first marking means (2) may be read, including when a plurality of documents (1, 1', 1") according to one of claims 1 to 5 are superposed.

7. The secured document according to one of claims 1 to 6, wherein the second marking means (4) encodes and stores:
- at least one physical parameter of the surface condition of the material making up the document;
- or a characteristic which identifies a printing head of a printer which allowed the document to be printed or further a characterization of the deformations generated on an image, upon printing, with a printing device.

8. The document according to the preceding claim, wherein the second marking means (4) encode and store at least one physical parameter of the surface condition of the material making up the document, this physical parameter including the reaction of the surface condition to optical or electromagnetic bombardment and/or, in the case of a paper document, the reflective characteristics, in a given spectral range, of an area of the paper after the latter has been subject to bombardment with optical or electromagnetic radiation.

9. A device (100) for editing secured documents, of the type according to one of the preceding claims, including:
- means (20) for unitarily reading the first marking means of the physical medium of a document,
- means (50, 200) for calculating second marking means, encoding and storing at least one physical parameter of the document and/or of a device having printed it, and for applying these second marking means to said document.

10. The device according to claim 9, wherein the means (50, 200) for calculating second marking means, further allows correlation of the second and of the first marking means.

11. The device according to one of claims 9 to 10, further including:
- means (40) for reading and/or writing data into the first marking means,
- and/or means (30) for reading the second marking means.

12. The device according to one of claims 9 to 11, further including means (60) for measuring a physical characteristic of each document.

13. A method for editing secured documents (1, 1', 1"), of the type according to one of claims 1 to 8, including first marking means (2) achieving identification of the document, including:
- calculation of the second marking means (4), this calculation including encoding of at least one physical parameter of the document and/or of means for printing this document,
- application of these second marking means to said document.

14. A device (100') for checking the authenticity of secured documents, of the type according to one of claims 1 to 8, including:
- means (20) for unitarily reading the first means for marking the physical medium of a document to be authenticated,
- means (30) for reading the second marking means, giving the possibility of:
a) reading the at least one physical parameter of the document to be authenticated,
b) decoding the second marking means in order to obtain the at least one physical parameter of the original document, and
c) comparing the value of the at least one physical parameter of the document to be authenticated with that of the original document;
or else giving the possibility of:
a') decoding the second marking means in order to obtain the at least one physical parameter of the device having printed the original document, and
b') comparing the value of the at least one physical parameter of the device having printed the document to be authenticated, with that of the device having printed the original document.

15. A method for checking the authenticity of secured documents, of the type according to one of claims 1 to 8, including:
- unitarily reading the first means for marking the physical medium of a document to be authenticated,
- reading the second marking means.
